# EUROPEAN PATENT SPECIFICATION

(11) **EP 1 820 669 B1**
(45) Date of publication and mention of the grant of the patent: **04.05.2011**
(21) Application number: 06425089.7
(22) Date of filing: 15.02.2006
(51) Int. Cl.: B60C 11/11, B60C 7/00, B60B 19/00

(54) **Vehicle wheel, in particular for cycles**
Fahrzeugrad, insbesondere für Zweiräder
Roue de véhicule, en particulier pour cycles

(43) Date of publication of application: 22.08.2007
(73) Proprietor: C.R.F. Società Consortile per Azioni, 10043 Orbassano (Torino) (IT)
(72) Inventor: Perlo, Pietro, 10043 Orbassano (Torino) (IT)
(74) Representative: Quinterno, Giuseppe

(56) References cited:
- EP-A- 0 894 648
- EP-A- 0 940 269
- GB-A- 2 005 200
- US-A- 1 449 549
- US-A- 4 493 355

## Description

The present invention relates to a vehicle wheel, and in particular to a wheel for cycles, of the kind defined in the preamble of claim 1.

A vehicle wheel of this kind is disclosed in EP-0 940 269.

US-A-4 493 355 discloses a vehicle wheel including a profiled member with a closed transverse section.

An object of the present invention is to provide a vehicle wheel, in particular for cycles, which has a reduced contact surface with the ground or other surface on which the vehicle is moving.

This and other objects are achieved according to the invention by a vehicle wheel having the features defined in claim 1.

In an embodiment, the annular self-supporting profiled member is advantageously made from metal material, preferably from steel.

This self-supporting profiled member is advantageously provided on an outer surface with a plurality of discrete bearing formations made from an elastomer material having a high resistance to wear obtained by using a composite elastomer in which resistance to wear caused by rolling is ensured by ceramic, metal or alloy micro- or nanoparticles. These bearing formations may be formed by annular members which are spaced about the whole outer surface of the self-supporting profiled member. The bearing formations may also be formed by a plurality of projecting "spots" which are circular or of another geometry and have a bearing area for instance of between 1 square millimetre and 16 square millimetres.

Further characteristic features and advantages of the invention are set out in the following detailed description, given purely by way of non-limiting example, and made with reference to the accompanying drawings, in which:
Fig. 1 is a partial view in axial section of a vehicle wheel, in particular for cycles, of the present invention;
Fig. 2 is a partial view in axial section of a variant of a wheel of the invention.

In the drawings, a vehicle wheel of the present invention, in particular for cycles, is shown overall by 1.

In the present description and in the accompanying claims, the term "cycles" is not limited solely to bicycles but generally covers other types of cycle, for instance power-assisted bicycles, motorcycles, etc.

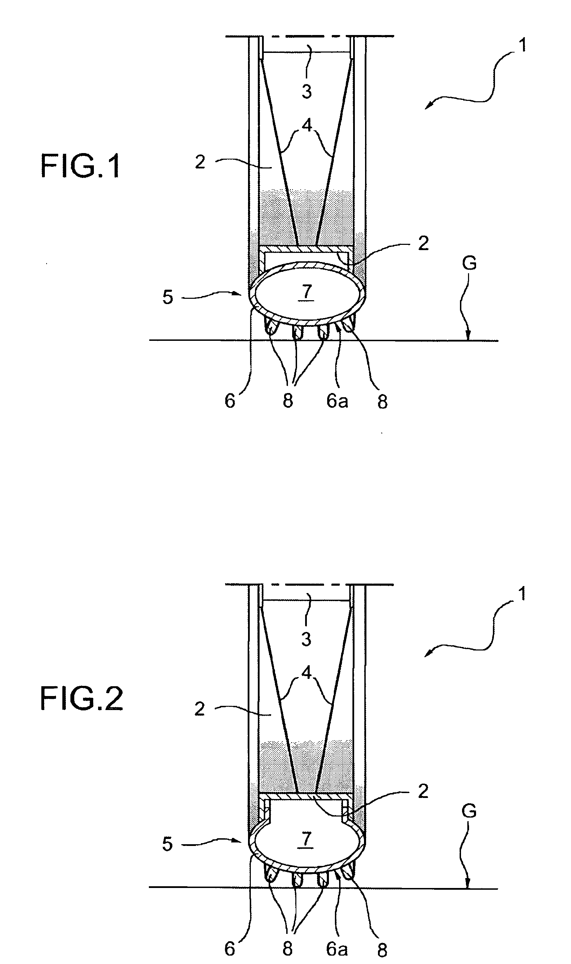

With reference to Fig. 1 in particular, the wheel 1 shown therein comprises a rim 2, made for instance from a light metal alloy or from a plastics or composite material, connected to a central hub 3, for instance by spokes 4. The rim 2 could nevertheless be connected to the hub 3 in a different manner, for instance by half-shells adapted overall to form a structure of lenticular shape or a disc, etc.

In the embodiment shown by way of example, the rim 2 has a section of square C shape. This shape is merely given by way of example and is in no way limiting.

An annular tread structure, shown overall by 5, is mounted about the rim 2. This structure is adapted in use to bear and to revolve on the ground G or other surface on which the vehicle to which the wheel 1 belongs is moving. This structure has a function equivalent to that played by conventional tyres with air chambers or tubular tyres in conventional wheels.

In the embodiment shown in Fig. 1, the tread structure 5 comprises a self-supporting profiled member 6 of annular shape made from a substantially rigid material such as laminated or extruded steel, in particular spring steel.

The self-supporting profiled member of Fig.1 has a hollow elliptical section with its convex outer surface 6a facing the ground G.

The annular profiled member 6 is self-supporting in the sense that its shape is intrinsically stable and does not require an air chamber. The region 7 within this self-supporting profiled member may be empty or filled with air. As an alternative, this region 7 may be filled with a polymer material, for instance a polyurethane or an elastomer whose purpose is to protect the interior of the profiled member 6 against moisture and, though its own elasticity, to help to prevent the profiled member 6 from bending beyond its own elastic limit so that it is permanently deformed.

Although the material, such as steel, from which the self-supporting profiled member 6 is made is substantially rigid per se, this self-supporting profiled member has a degree of elastic deformability as a result of its shape. The lower diameter of the section of the profiled member 6 may therefore be substantially reduced, for instance by some 10-25%, as a result of the load bearing on it when it is in use, and the greater diameter of this section may be correspondingly increased.

The outer surface 6a of the self-supporting profiled member 6 is connected to a plurality of discrete, radially projecting, bearing formations 8 adapted to contact the ground G.

In the embodiment shown in Figs. 1 and 2, the bearing formations 8 are in the form of rings which are transversely spaced from one another about the whole periphery of the outer surface 6a of the self-supporting member 6. Other embodiments are nevertheless possible, such as the provision of discrete "spots".

The bearing formations 8 are advantageously made from an elastomer material having a high resistance to wear, preferably in composite form with the inclusion of ceramic, metal or alloy micro- or nanoparticles.

The bearing formations 8 may be attached to the outer surface of the self-supporting member 6 using various known techniques, for instance adhesion, engagement in seats provided in the outer surface of the self-supporting member, duplicate moulding, etc.

The arrangement of the bearing formations is preferably such that direct contact between the self-supporting profiled member 6 and the ground G is avoided, even in operating conditions in which the wheel 1 is in an inclined position with respect to the ground.

The self-supporting profiled member 6 of closed section of the wheel of Fig. is extruded and then bent to form a rim whose ends are then welded together. In this embodiment, the member 6 may be completely independent from the wheel 1 and applied thereto in its final form as is conventionally the case with the conventional air chamber and tyre system. In this case, the rim 2 of the wheel may advantageously be provided with pressure hooks adapted to make the installation or replacement of the profiled member 6 rapid and simple.

Fig. 2 shows a variant of the wheel of the invention. In this Figure, parts and components already described bear the same reference numerals as used previously.

In the variant of Fig. 2, the annular tread structure 5 comprises an annular self-supporting profiled member 6 of open transverse section, substantially in the shape of a C, whose end members are connected to the rim 2.

In this case as well, the region 7 within the self-supporting profiled member 6 may be filled with air or filled, for instance, with a polymer or elastomer material.

The self-supporting profiled member 6 of Fig. 2 is provided with a plurality of discrete, radially projecting, bearing formations 8 in relation to which the preceding description applies.

The wheel of the invention has a limited contact surface with the ground G as this contact takes place solely at the location of the projecting bearing formations 8. This makes it possible substantially to reduce the resistance to travel. The transverse distance between the end points of contact of these formations with the ground is nevertheless such as to ensure the maximum stability of the vehicle.

It will be appreciated that, without prejudice to the principle of the invention, the embodiments and details thereof may be widely varied with respect to what has been described and illustrated purely by way of non-limiting example, without thereby departing from the scope of the accompanying claims.

## Claims

1. A vehicle wheel (1), in particular for cycles, comprising
a rim (2) connected to a central hub (3), and
an annular tread structure (5) mounted about the rim (2) and adapted in use to bear and revolve on the ground (G) or other surface on which the vehicle is moving,
the tread structure (5) comprising a self-supporting profiled member (6) of annular shape made from a substantially rigid material and having an arch-shaped hollow section with a convex outer surface (6a) with which a plurality of discrete, radially projecting, bearing formations (8) is connected and adapted to engage the ground or other surface (G);
**characterised in that** the profiled member (6) is obtained from an extruded profiled member bent to form a rim whose ends are joined together.

2. A wheel as claimed in claim 1, wherein the self-supporting profiled member (6) has a closed transverse section.

3. A wheel as claimed in claim 1, wherein the self-supporting profiled member (6) has an open transverse section.

4. A wheel as claimed in one of the preceding claims, wherein the self-supporting profiled member (6) is made from a metal or plastics or composite material.

5. A wheel as claimed in claim 4, wherein the self-supporting profiled member (6) is made from steel.

6. A wheel as claimed in any one of the preceding claims, wherein the bearing formations (8) are made from an elastomer or composite material with possible inclusions of ceramic, metal or alloy micro- and/or nanoparticles.

7. A wheel as claimed in any one of the preceding claims, wherein at least some bearing formations (8) are in the form of rings transversely spaced about the whole periphery of the outer surface (6a) of the self-supporting profiled member (6).

8. A wheel as claimed in any one of claims 1 to 6, wherein at least some bearing formations (8) are in the form of protruding spots with a bearing area preferably of between 1 square millimetre and 16 square millimetres.

9. A wheel as claimed in any one of the preceding claims, wherein the bearing formations (8) are glued to the self-supporting profiled member.

10. A wheel as claimed in any one of claims 1 to 8, wherein the bearing formations (8) are duplicate moulded on the self-supporting profiled member (6).

11. A wheel as claimed in any one of claims 1 to 10, wherein the bearing formations (8) are engaged in corresponding seats provided in the outer surface (6a) of the self-supporting profiled member (6).

12. A wheel as claimed in any one of the preceding claims, wherein the rim (2) is provided with retaining or hooking members adapted to enable the rapid insertion of the self-supporting profiled member (6).

## Patentansprüche

1. Fahrzeugrad (1), insbesondere für Zweiräder, enthaltend:
eine Felge (2), die mit einer zentralen Nabe (3) verbunden ist, und
eine ringförmige Profilstruktur (5), die auf der Felge (2) angebracht und dazu eingerichtet ist, in Verwendung auf dem Boden (G) oder einer anderen Oberfläche, auf der sich das Fahrzeug bewegt, aufzuliegen und zu rollen,
wobei die Profilstruktur (5) ein selbsttragendes ringförmiges Profilelement (6) enthält, das aus einem im wesentlichen starren Material besteht und einen bogenförmigen, hohlen Querschnitt mit einer konvexen Außenoberfläche (6a) hat, mit der eine Vielzahl einzelner, radial hervorragender Auflagekörper (8) verbunden ist, die dazu eingerichtet sind, mit dem Boden oder einer anderen Oberfläche (G) in Eingriff zu stehen;
**dadurch gekennzeichnet, dass** das Profilelement (6) aus einem extrudierten, profilierten Element gewonnen wird, das gebogen ist, um einen Kranz zu bilden, dessen Enden miteinander verbunden sind.

2. Rad nach Anspruch 1, bei dem das selbsttragende Profilelement (6) einen geschlossenen Querschnitt hat.

3. Rad nach Anspruch 1, bei dem das selbsttragende Profilelement (6) einen offenen Querschnitt hat.

4. Rad nach einem der vorhergehenden Ansprüche, bei dem das selbsttragende Profilelement (6) aus Metall oder Kunststoff oder einem Verbundmaterial besteht.

5. Rad nach Anspruch 4, bei dem das selbsttragende Profilelement (6) aus Stahl besteht.

6. Rad nach einem der vorhergehenden Ansprüche, bei dem die Auflagekörper (8) aus einem Elastomer oder Verbundmaterial mit möglichen Einschlüssen aus Keramik, Metall oder Legierungs-Mikro- und/oder Nanopartikeln bestehen.

7. Rad nach einem der vorhergehenden Ansprüche, bei dem wenigstens einige Auflagekörper (8) die Gestalt von Ringen haben, die entlang des gesamten Umfangs der Außenoberfläche (6a) des selbsttragenden Elementes (6) in Querrichtung beabstandet sind.

8. Rad nach einem der Ansprüche 1 bis 6, bei dem wenigstens einige der Auflagekörper (8) die Gestalt hervorragender Punkte haben, die eine Auflagefläche vorzugsweise zwischen 1 bis 16 mm² haben.

9. Rad nach einem der vorhergehenden Ansprüche, bei dem die Auflagekörper (8) mit dem selbsttragenden Profilelement verklebt sind.

10. Rad nach einem der Ansprüche 1 bis 8, bei dem die Auflagekörper (8) auf dem selbsttragenden Profilelement (6) durch Abformguss ausgebildet sind.

11. Rad nach einem der Ansprüche 1 bis 10, bei dem die Auflagekörper (8) in entsprechende Sitze eingreifen, die in der Außenoberfläche (6a) des selbsttragenden Profilelementes (6) ausgebildet sind.

12. Rad nach einem der vorhergehenden Ansprüche, bei dem die Felge (2) mit Rückhalte- oder Hakenelementen versehen ist, die dazu eingerichtet sind, das schnelle Einfügen des selbsttragenden Profilelementes (6) zu ermöglichen.

## Revendications

1. Roue de véhicule (1) en particulier pour des cycles, comprenant :
une jante (2) raccordée à un moyeu central (3), et
une structure de bande de roulement annulaire (5) montée autour de la jante (2) et adaptée à l'usage pour s'appuyer et tourner sur le sol (G) ou une autre surface sur laquelle le véhicule se déplace,
la structure de bande de roulement (5) comprenant un élément profilé autoporteur (6) de forme annulaire réalisé à partir d'un matériau sensiblement rigide et ayant une section creuse en forme d'arc avec une surface externe convexe (6a) à laquelle une pluralité de formations de palier (8) distinctes radialement en saillie est raccordée et adaptée pour mettre en prise le sol ou une autre surface (G) ;
**caractérisée en ce que** l'élément profilé (6) est obtenu à partir d'un élément profilé extrudé cintré afin de former une jante dont les extrémités sont assemblées.

2. Roue selon la revendication 1, dans laquelle l'élément profilé autoporteur (6) a une section transversale fermée.

3. Roue selon la revendication 1, dans laquelle l'élément profilé autoporteur (6) a une section transversale ouverte.

4. Roue selon l'une quelconque des revendications précédentes, dans laquelle l'élément profilé autoporteur (6) est réalisé à partir d'un métal ou d'une matière plastique ou d'une matière composite.

5. Roue selon la revendication 4, dans laquelle l'élément profilé autoporteur (6) est réalisé à partir d'acier.

6. Roue selon l'une quelconque des revendications précédentes, dans laquelle les formations de palier (8) sont réalisées à partir d'un élastomère ou d'un matériau composite avec des inclusions éventuelles de micro et/ou nanoparticules de céramique, de métal ou d'alliage.

7. Roue selon l'une quelconque des revendications précédentes, dans laquelle au moins certaines des formations de palier (8) se présentent sous la forme de bagues espacées de manière transversale autour de toute la périphérie de la surface externe (6a) de l'élément profilé autoporteur (6).

8. Roue selon l'une quelconque des revendications 1 à 6, dans laquelle au moins certaines des formations de palier (8) se présentent sous la forme de points en saillie avec une zone de palier de préférence comprise entre 1 millimètre carré et 16 millimètres carrés.

9. Roue selon l'une quelconque des revendications précédentes, dans laquelle les formations de palier (8) sont collées à l'élément profilé autoporteur.

10. Roue selon l'une quelconque des revendications 1 à 8, dans laquelle les formations de palier (8) sont moulées en double exemplaire sur l'élément profilé autoporteur (6).

11. Roue selon l'une quelconque des revendications 1 à 10, dans laquelle les formations de palier (8) sont mises en prise dans des sièges correspondants prévus dans la surface externe (6a) de l'élément profilé autoporteur (6).

12. Roue selon l'une quelconque des revendications précédentes, dans laquelle la jante (2) est prévue avec des éléments de retenue ou d'accrochage adaptés pour permettre l'insertion rapide de l'élément profilé autoporteur (6).
